# EUROPÄISCHE PATENTANMELDUNG

(11) **EP 4 635 764 A1**
(43) Veröffentlichungstag der Anmeldung: **22.10.2025**
(21) Anmeldenummer: 25159738.1
(22) Anmeldetag: 24.02.2025
(51) Int. Cl.: B60H 1/28, B62D 25/08

(54) **ZWEITEILIGES LUFTANSAUGMODUL MIT AUFSCHIEBBAREM LUFTFÜHRUNGSELEMENT UND KRAFTFAHRZEUG MIT EINEM SOLCHEN LUFTANSAUGMODUL**

(30) Priorität: 15.04.2024 DE 102024110417
(71) Anmelder: AUDI AG, 85057 Ingolstadt (DE)
(72) Erfinder: ALBL, Sebastian, 01689 Weinböhla (DE); BEHLE, Christoph, 85309 Pörnbach (DE); WELZ, Stefan, 85051 Ingolstadt (DE)

(57) **Zusammenfassung**

Luftansaugmodul (10) für eine Klimatisierungseinheit eines Kraftfahrzeugs mit einem Basiselement (12), das dazu eingerichtet ist, mit einem Karosseriebauteil des Kraftfahrzeugs, insbesondere einer den Innenraum von einem Motorraum trennenden Stirnwand (204) oder/und einem Querträger einer Frontscheibe verbunden zu werden, insbesondere verschraubt zu werden, einem eine Luftansaugöffnung aufweisenden Luftführungselement (16), das dazu eingerichtet ist, an dem Basiselement (12) befestigt zu werden, wobei das Basiselement (12) einen dem Luftführungselement (16) zugewandten Basisrandabschnitt (12r) aufweist, und das Luftführungselement (16) einen dem Basiselement (12) zugwandten Führungselementrandabschnitt (16r) aufweist, wobei der Basisrandabschnitt (12r) und der Führungsrandabschnitt (16r) derart ausgebildet sind, dass das Luftführungselement (16) mit dem Basiselement (12) lösbar verbindbar oder verbunden ist, insbesondere mittels einer formschlüssigen oder/und kraftschlüssigen Verbindung.

## Beschreibung

Die Erfindung betrifft ein Luftansaugmodul für eine Klimatisierungseinheit eines Kraftfahrzeugs und ein Kraftfahrzeug mit einem solchen Luftansaugmodul.

Aus dem Stand der Technik ist Luftansaugvorrichtung bekannt, die in der Stirnwand der Karosserie integriert ist, wie dies in der DE 10 2007 035 489 A1 beschreiben ist, wobei die Stirnwand nach vorne gewölbt ist, um eine Lufteintrittsöffnung zu bilden. Ferner ist eine weitere Luftansaugvorrichtung aus der DE 10 2011 088 671 A1 bekannt, bei der eine nach unten gerichtete Lufteinlassöffnung als Ablauf für Kondenswasser dient.

Bislang hatten bekannte Kraftfahrzeuge ein ausreichend großes Prestigemaß um einen hinsichtlich Durchströmungsparametern geeigneten Frischluftweg bereitstellen zu können. Der Frischluftweg wird dabei insbesondere mittels der Bauteile Schottwände (Wasserkasten-Boden, Wasserkasten-Vorderwand, Wasserkasten-Abdeckung), Stirnwand zwischen Innenraum und Motorraum und Federbeinaufnahmen definiert. Dabei soll die Frischluft in Breitenrichtung des Kraftfahrzeugs durch den Wasserkasten nach außen (zur Seite hin) zu dem Luftansaugmodul des Klimagerätes bzw. der Klimatisierungseinheit strömen, um eine maximale Wasserabscheidung zu ermöglichen.

Die Klimatisierungseinheit ist insbesondere lenkungsabhängig auf der Beifahrerseite angeordnet, wobei der Frischluftweg ebenfalls lenkungsspezifisch zur Beifahrerseite ausgeführt ist und dort ein Luftansaugmodul vorzusehen ist.

Durch das sogenannte Cab-forward-Design für ein vergrößertes Innenraumvolumen und Anforderungen bezüglich einer flachen Fronthaube ist eine Luftstrecke mit ausreichend guten Durchströmungsparametern und Wasserabscheidung insbesondere in der bisherigen Längs- und Höhen-Ausdehnung nicht mehr möglich. Ferner ist ein zur Verfügung stehender Bauraum, insbesondere zwischen einer den Fahrzeuginnenraum und den Motorraum trennenden Stirnwand bzw. einem Frontscheibenquerträger und einem Federbeindom der Karosserie verringert, so dass der Einbau bzw. die Wartung von Bauteilen, wie beispielweise dem Luftansaugmodul erschwert ist.

Die der Erfindung zu Grunde liegende Aufgabe wird darin gesehen, ein Luftansaugmodul für ein Kraftfahrzeug anzugeben, bei dem die obigen Nachteile vermieden werden können, wobei bei geringem Raumangebot ein einfacher Einbau im Kraftfahrzeug ermöglicht sein soll.

Diese Aufgabe wird gelöst durch ein Luftansaugmodul und ein Kraftfahrzeug mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird also ein Luftansaugmodul für eine Klimatisierungseinheit eines Kraftfahrzeugs mit einem Basiselement, das dazu eingerichtet ist, mit einem Karosseriebauteil des Kraftfahrzeugs, insbesondere einer den Innenraum von einem Motorraum trennenden Stirnwand oder/und einem Querträger einer Frontscheibe, verbunden zu werden, insbesondere verschraubt zu werden, einem eine Luftansaugöffnung aufweisenden Luftführungselement, das dazu eingerichtet ist, an dem Basiselement befestigt zu werden, wobei das Basiselement einen dem Luftführungselement zugewandten Basisrandabschnitt aufweist, und das Luftführungselement einen dem Basiselement zugwandten Führungselementrandabschnitt aufweist, wobei der Basisrandabschnitt und der Führungsrandabschnitt derart ausgebildet sind, dass das Luftführungselement mit dem Basiselement lösbar verbindbar oder verbunden ist, insbesondere mittels einer formschlüssigen oder/und kraftschlüssigen Verbindung.

Hierdurch wird ein zweiteiliges Luftansaugmodul bereitgestellt, das auch bei geengten Platzverhältnissen auf einfache Weise zwischen der Stirnwand und einem Federbeindom montiert werden kann. Dabei ist das Luftführungselement auch zu Wartungs- bzw. Reinigungszwecken einfach, insbesondere auch werkzeuglos entfernbar.

Bei dem Luftansaugmodul können das Luftführungselement und das Basiselement relativ zueinander und geführt zueinander beweglich sein, insbesondere können sie translatorisch verschiebbar sein. Anders ausgerückt können das Luftführungselement und das Basiselement entlang einer gedachten Trennebene relativ zueinander beweglich sein.

Vorgeschlagen wird auch ein Kraftfahrzeug mit verbrennungsmotorischem oder/und elektrischem Antrieb, wobei das Kraftfahrzeug aufweist: eine Karosserie mit einer einen Fahrzeuginnenraum von einem Motorraum trennenden Stirnwand, einem unterhalb einer Frontscheibe angeordneten Frontscheiben-Querträger und wenigstens einem vor der Stirnwand angeordneten Federbeindom; ein Luftansaugmodul mit einem Basiselement, das mit der Stirnwand oder/und dem Frontscheiben-Querträger verbunden ist, und mit einem eine Luftansaugöffnung aufweisenden Luftführungselement, das an dem Basiselement befestigbar oder befestigt ist, wobei das Basiselement einen dem Luftführungselement zugewandten Basisrandabschnitt aufweist, und das Luftführungselement einen dem Basiselement zugwandten Führungselementrandabschnitt aufweist, wobei der Basisrandabschnitt und der Führungsrandabschnitt derart ausgebildet sind, dass das Luftführungselement mit dem Basiselement lösbar verbindbar oder verbunden ist, insbesondere mittels einer formschlüssigen oder/und kraftschlüssigen Verbindung.

Hierdurch kann das zweiteilige Luftansaugmodul bei beengten Platzverhältnissen auf einfache Weise zwischen der Stirnwand und einem Federbeindom montiert werden. Insbesondere kann das Basiselement ohne das daran angebrachte Luftführungselement an der Stirnwand befestigt, insbesondere verschraubt werden. Dabei kann zum Befestigen des Basiselements mittels eines Werkzeug der aufgrund des noch nicht eingesetzten Luftführungselements vorhandene Raum genutzt werden. Nachträglich kann dann das Luftführungselement an dem Basiselement angeordnet bzw. mit diesem verbunden werden. Dabei ist das Luftführungselement auch zu Wartungs- bzw. Reinigungszwecken einfach, insbesondere auch werkzeuglos entfernbar. Denkbar ist in diesem Zusammenhang auch eine werkzeuglose Verrastung zwischen dem Luftführungselement und dem Basiselement.

Bei dem Kraftfahrzeug kann das Basiselement unterhalb des Frontscheiben-Querträgers angeordnet und derart ausgebildet sein, dass das Luftführungselement vor dem Frontscheiben-Querträger angeordnet ist, insbesondere hinterschnittsfrei zu dem Frontscheiben-Querträger an dem Basiselement montierbar oder montiert ist. Mit anderen Worten ist das Basiselement so ausgeführt, dass es zwar unterhalb des Frontscheiben-Querträgers an der Stirnwand befestigt ist, aber sein Basisrandabschnitt so ausgeführt bzw. angeordnet ist, dass das Luftführungselement daran befestigt werden kann, ohne von dem Frontscheiben-Querträger behindert zu sein. Anders ausgedrückt ist zwischen dem Basiselement und dem Luftführungselement eine gedachte Trennebene gebildet, die den Frontscheiben-Querträger nicht schneidet.

Bei dem Kraftfahrzeug kann das Luftansaugmodul bezogen auf eine Längsrichtung des Kraftfahrzeugs zwischen der Stirnwand und dem Federbeindom angeordnet sein.

Bei dem Kraftfahrzeug kann das Luftführungselement relativ zu dem mit der Stirnwand oder/und dem Frontscheiben-Querträger verbundenen Basiselement beweglich sein, insbesondere translatorisch entlang einer Höhenrichtung verschiebbar sein. Anders ausgedrückt kann das Luftführungselement entlang der oben bereits erwähnten, gedachten Trennebene, die zwischen dem Basiselement und dem Luftführungselement gebildet ist, nach oben bzw. nach unten bewegt werden. Es wird in diesem Zusammenhang darauf hingewiesen, dass die gedachte Trennebene nicht zwingend vertikal ausgerichtet sein muss, sondern auch geneigt zu einer vertikalen Höhenrichtung ausgerichtet sein kann.

Eine optionale, werkzeuglose Verrastung zwischen dem Luftführungselement und dem Basiselement kann insbesondere in einen eingerasteten Zustand gebracht werden bzw. sein, wenn das Luftführungselement vollständig auf das Basiselement aufgeschoben ist. Eine solche Verrastung kann auch werkzeuglos lösbar ausgeführt sein, um das Luftführungselement entlang der Verschieberichtung von dem Basiselement abnehmen zu können.

Das Kraftfahrzeug kann einen Wasserkasten aufweisen mit einem Bodenelement und mit einem Deckelelement, wobei das Luftansaugmodul, insbesondere das Luftführungselement und dessen Luftansaugöffnung unterhalb des Deckelelements angeordnet sind.

Bei dem Kraftfahrzeug kann ein in dem Bodenelement des Wasserkastens vorgesehenes Wassersammelbecken tiefer liegt als die Luftansaugöffnung des Luftansaugmoduls.

Dabei kann ferner eine Außenseite des Luftansaugmoduls, insbesondere des Luftführungselements dem Inneren des Wasserkastens zugewandt sein.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Perspektivdarstellung von Komponenten eines Luftansaugmoduls;
- Fig. 2: eine vereinfachte und schematische Perspektivdarstellung eines vorderen Teils eines Kraftfahrzeugs mit einem Luftansaugmodul;
- Fig. 3: eine vereinfachte und schematische seitliche Draufsicht auf das Luftansaugmodul in einem halb zusammengebauten Zustand;
- Fig. 4: eine vereinfachte und schematische Draufsicht auf eine rückwärtige Seite eines Luftführungselements des Luftansaugmoduls etwa entsprechend dem Pfeil IV der Fig.1;
- Fig. 5: eine vereinfachte und schematische Schnittansicht etwa entsprechende der Schnittlinie V-V der Fig. 2.

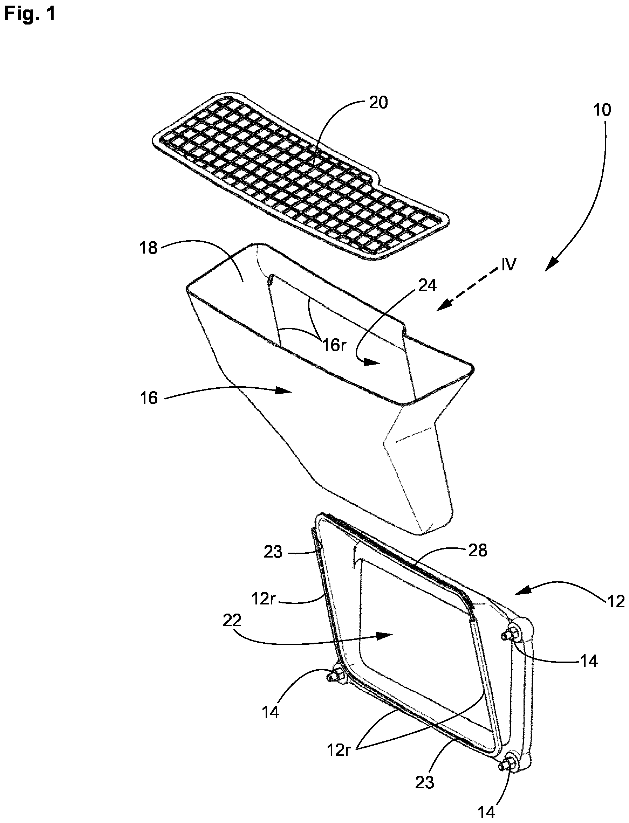

In Fig. 1 ist in einer vereinfachten und schematischen Perspektivdarstellung ein Luftansaugmodul 10 in einer Art Explosionsdarstellung gezeigt.

Das Luftansaugmodul weist ein Basiselement 12 auf, das dazu eingerichtet ist, mit einem Karosseriebauteil eines Kraftfahrzeugs verbunden zu werden. Eine Möglichkeit zur Verbindung des Basiselements mit dem Karosseriebauteil kann eine Schraubverbindung sein, was in Fig. 1 durch die SchraubenMutter-Anordnungen 14 illustriert ist. Es sind aber auch andere Verbindungsarten denkbar, wie etwa eine Klemmverbindung oder eine materialschlüssige Klebeverbindung oder dergleichen.

Das Luftansaugmodul 10 weist ferner ein Luftführungselement 16 auf, das dazu eingerichtet ist, an dem Basiselement 12 befestigt zu werden. Das Luftführungselement 16 weist eine Luftansaugöffnung 18 auf. Die Luftansaugöffnung kann von einem Gitterelement 20 abgedeckt sein, um das Eindringen von größeren Partikeln, wie beispielwese Laub oder dergleichen zu verhindern.

Das Basiselement 12 weist einen dem Luftführungselement 16 zugewandten Basisrandabschnitt 12r auf. Das Luftführungselement 16 weist einen dem Basiselement 12 zugwandten Führungselementrandabschnitt 16r auf. Dabei sind der Basisrandabschnitt 12r und der Führungsrandabschnitt 16r derart ausgebildet, dass das Luftführungselement 16 mit dem Basiselement 12 lösbar verbindbar oder verbunden ist. Insbesondere kann das Luftführungselement 16 mittels einer formschlüssigen oder/und kraftschlüssigen Verbindung an dem Basiselement 12 angebracht sein.

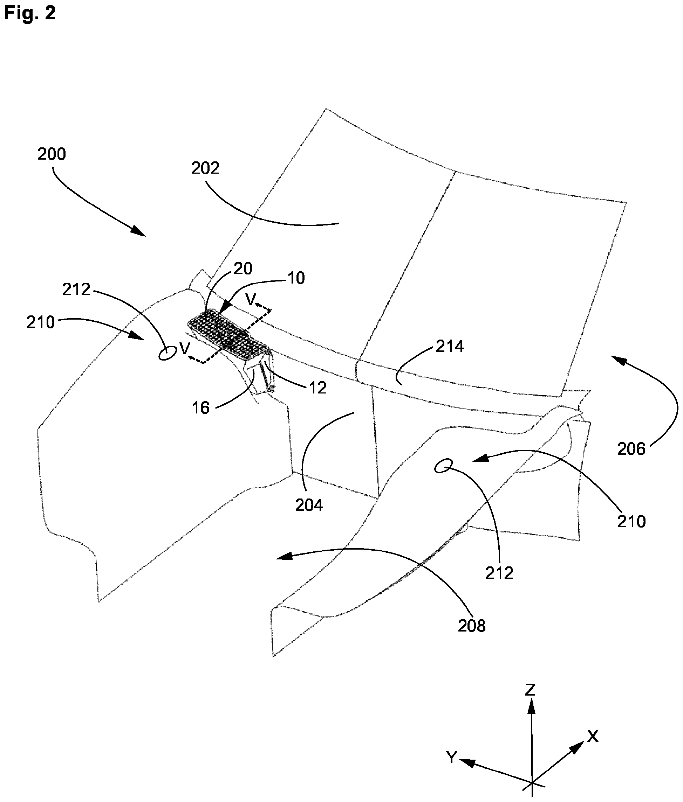

In Fig. 2 ist stark vereinfacht und schematisch ein vorderer Teil eines Kraftfahrzeugs 200 dargestellt. Ersichtlich sind insbesondere eine Frontscheibe 202 (Windschutzscheibe) und eine Stirnwand 204, die einen Fahrzeuginnenraum 206 von einem Motorraum 208 trennt. Seitlich sind zwei Federbeindome 210 angedeutet mit schematisch angedeuteten Befestigungspunkten 212 für nicht dargestellte Federbeine.

Die Frontscheibe 202 ist von einem Scheibenquerträger 214 abgestützt. Der Scheibenquerträger 214 ist mit der Stirnwand 204 verbunden.

Aus der Fig. 2 ist ersichtlich, dass das Luftansaugmodul 10 an der Stirnwand 204 befestigt ist. Insbesondere ist das Basiselement 12 mit der Stirnwand 204 verschraubt und das Luftführungselement 16 ist lösbar mit dem Basiselement 12 verbunden. Ergänzend wird darauf hingewiesen, dass die Verbindung zwischen Basiselement 12 und Stirnwand 204 eine Abdichtung bzw. Dichtelement aufweisen kann, um einen Fluideintritt zwischen dem Basiselement 12 und der Stirnwand 204 zu vermeiden.

Das Luftansaugmodul 10 ist in Längsrichtung X des Kraftfahrzeug 200 zwischen dem Frontscheiben-Querträger 214 und einem betreffenden Federbeindom 210 angeordnet. Anders ausgedrückt ist das Luftansaugmodul 10 seitlich vorgesehen, insbesondere auf einer Beifahrerseite des Kraftfahrzeugs 200.

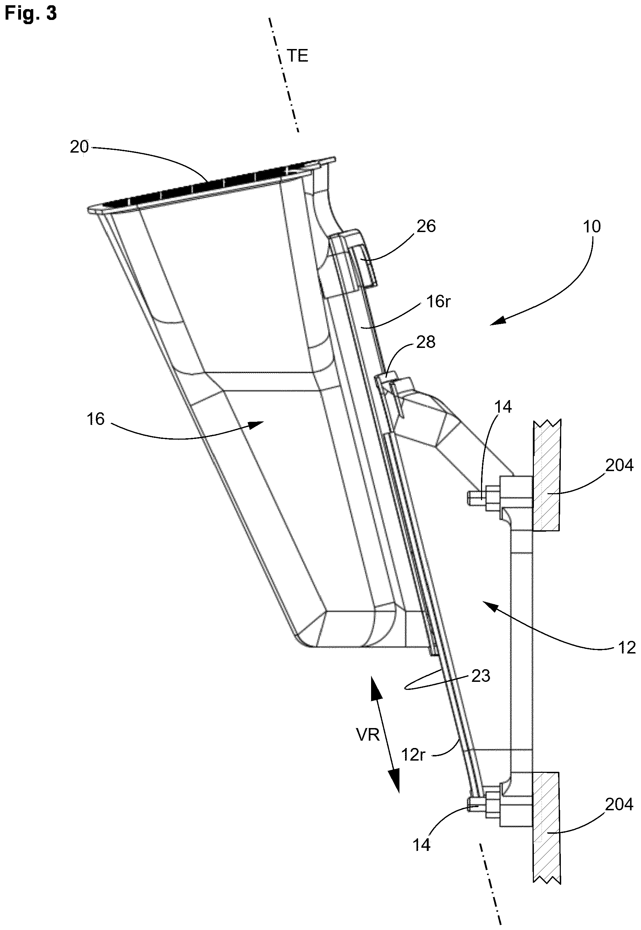

Fig. 3 zeigt das Luftansaugmodul 10 in einer seitlichen Draufsicht, wobei ein Zustand dargestellt ist, in dem das Luftführungselement 16 nicht vollständig mit dem Basiselement 12 verbunden bzw. an diesem angebracht ist.

Aus der Fig. 3 ist ersichtlich, dass das Luftführungselement 16 und das Basiselement 12 relativ zueinander und geführt zueinander beweglich sind.

Insbesondere sind sie zueinander translatorisch verschiebbar, was durch den Doppelpfeil VR illustriert ist.

In der Fig. 3 ist vereinfacht und als Schnittansicht auch die Stirnwand 204 angedeutet, an der das Basiselement 12 des Luftansaugmoduls 10 befestigt ist, insbesondere mittels Schrauben 14.

Zwischen dem Basiselement 12 und dem Luftführungselement 16 ist eine gedachte Trennebene TE gebildet, die in der Fig. 3 durch eine strichpunktierte Linie angedeutet ist. In dieser Darstellung liegt die Trennebene TE orthogonal zur Zeichnungsebene.

Aus der Fig. 1 ist ferner ersichtlich, dass an dem Basiselement 12 der Basisrandabschnitt 12r entlang von drei Seiten, insbesondere unten sowie links und rechts, einer Lufteinlassöffnung 22 umlaufend ausgebildet ist. Insbesondere bildet der Basisrandabschnitt 12r eine nutartige, umlaufende Aufnahme 23. Anders ausgedrückt ist der Basisrandabschnitt 12r U-förmig entlang der Lufteinlassöffnung 22 ausgebildet.

Der Führungselementrandabschnitt 16r des Luftführungselements 16 ist als federartiger Vorsprung ausgebildet, der in den nutartig ausgeführten Basisrandabschnitt 16r bzw. die Aufnahme 23 von oben einführbar ist (Verschiebungsrichtung VR in Fig. 3). Der Führungselementrandabschnitt 16r begrenzt ebenfalls eine Lufteinlassöffnung 24 des Luftführungselements 16 (Fig. 1), die im montierten Zustand der Lufteinlassöffnung 22 des Basiselements gegenüber angeordnet ist (Fig. 3).

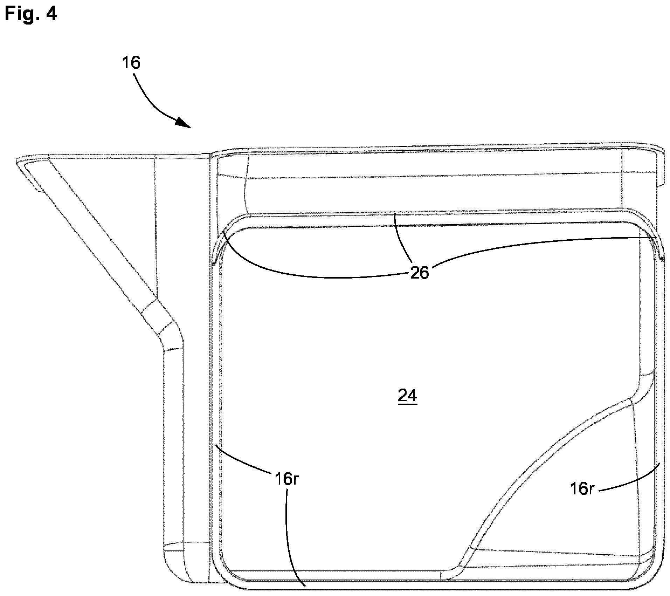

Fig. 4 zeigt eine rückwärtige Ansicht des Luftführungselements 16. An dem Luftführungselement 16 ist entlang eines oberen Randes der Lufteinlassöffnung 24 eine nutartig ausgebildeter Aufnahmeabschnitt 26 vorgesehen. Dieser Aufnahmeabschnitt 26 dient dazu einen oberen Rand 28 des Basiselements 12 aufzunehmen, der der frei von dem Basisrandabschnitt 12r ist. Dies ist auch aus der Darstellung der Fig. 3 ersichtlich.

Betrachtet man die Fig. 1, 3 und 4 zusammen ist ersichtlich, dass der Basisrandabschnitt 12r bzw. die Aufnahme 23 des Basiselements 12 und der Aufnahmeabschnitt 26 im montierten bzw. verbundenen Zustand gemeinsam eine umlaufende Begrenzung der Lufteinlassöffnungen 22, 24 bilden.

Anders ausgedrückt sind der Basisrandabschnitt 12r bzw. die nutartige Aufnahme 23 des Basiselements 12 und der Führungselementrandabschnitt 16r bzw. der Aufnahmeabschnitt 26 des Luftführungselements 16 korrespondieren zueinander ausgebildet bzw. geformt, so dass insbesondere eine formschlüssige Verbindung zwischen dem Basiselement 12 und dem Luftführungselement 16 herstellbar oder hergestellt ist. Dabei kann das Luftführungselement 16 jederzeit von dem an der Karosserie bzw. der Stirnwand 204 befestigten Basiselement durch eine Verschiebebewegung nach oben gelöst bzw. getrennt werden.

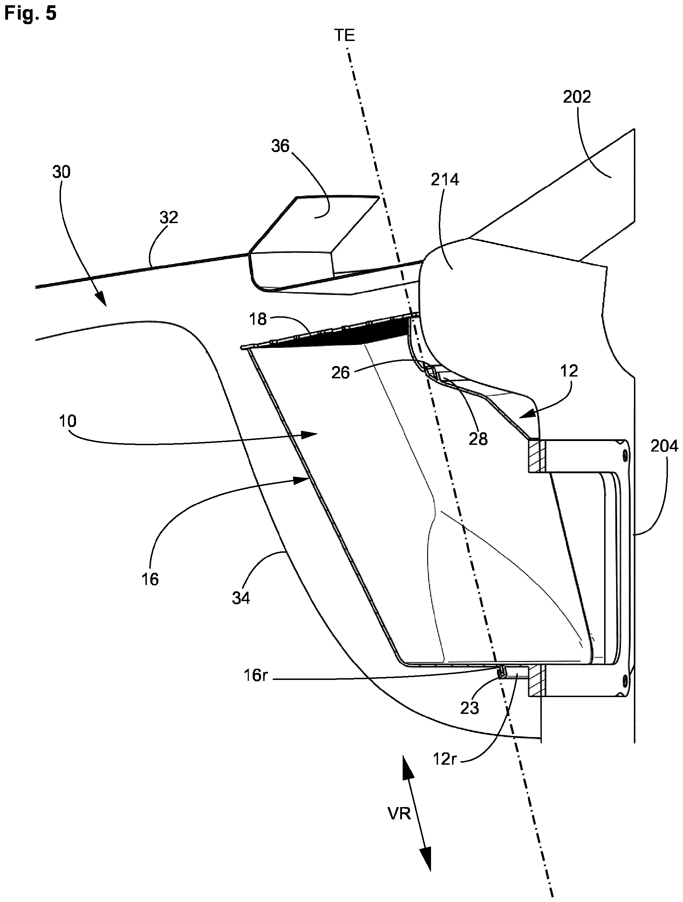

Fig. 5 zeigt eine vereinfachte und schematische Schnittansicht etwa entsprechend der Schnittlinie V-V der Fig. 2. In der Fig. 5 ist als strichpunktierte Line TE die Trennungsebene zwischen dem Basiselement 12 und dem Luftführungselement 16 angedeutet.

In der Fig. 5 sind ferner die Stirnwand 204, die Frontscheibe 202 und der Frontscheiben-Querträger 214 ersichtlich. Wie sich aufgrund der Lage der Trennungsebene TE ergibt, sind das Basiselement 2 und das Luftführungselement 16 so ausgebildet, dass das Luftführungselement 16 hinterschnittsfrei bezogen auf den Frontscheiben-Querträger 214 an dem Basiselement 12 angebracht werden kann bzw. ist. Anders ausgedrückt ist das Luftführungselement 16 des Luftansaugmoduls 10 vor dem Frontscheiben-Querträger 214 angeordnet bzw. kann vor diesem nach/unten bewegt bzw. verschoben werden (Verschiebungsrichtung VR).

Mit anderen Worten kann das Luftführungselement 16 beim Zusammenbau bzw. der Montage von oben auf das Basiselement 12 aufgeschoben werden, wobei der Führungselementrandabschnitt 16r an dem Frontscheiben-Querträger 214 vorbei geführt wird. Gleiches gilt bei einer umgekehrten Bewegung, wenn das Luftführungselement 16 nach oben hin von dem Basiselement 12 entfernt wird.

In der Fig. 5 ist auch ersichtlich, dass die Aufnahme 23 nutförmig ausgebildet ist, und der Führungselementrandabschnitt 16r federartig in dieser Aufnahme 23 aufgenommen ist. Ferner ist ersichtlich, dass der Aufnahmeabschnitt 26 des Luftführungselements 16 und der obere Rand 28 des Basiselements 12 miteinander in Eingriff gebracht sind.

Das Luftansaugmodul 10 ist in einem in der Fig. 5angedeuteten Wasserkasten 30 angeordnet. Der Wasserkasten 30 weist ein Deckelelement 32 auf, das oberhalb des Luftansaugmoduls 10 angeordnet ist. Ferner weit der Wasserkasten 30 ein Bodenelement 34 auf, das um das Luftansaugmodul 10 herum geführt angeordnet ist. An dem Deckelelement 32 des Wasserkastens 30 kann eine Schwallwand 36 vorgesehen sein, um einen Großteil von anfallendem Wasser zu beiden Seiten des Fahrzeugs abzuleiten.

## Patentansprüche

1. Luftansaugmodul (10) für eine Klimatisierungseinheit eines Kraftfahrzeugs (200) mit
einem Basiselement (12), das dazu eingerichtet ist, mit einem Karosseriebauteil des Kraftfahrzeugs (200), insbesondere einer den Innenraum (206) von einem Motorraum (208) trennenden Stirnwand (204) oder/und einem Querträger (214) einer Frontscheibe (202) verbunden zu werden, insbesondere verschraubt zu werden;
einem eine Luftansaugöffnung (18) aufweisenden Luftführungselement (16), das dazu eingerichtet ist, an dem Basiselement (12) befestigt zu werden,
wobei das Basiselement (12) einen dem Luftführungselement (16) zugewandten Basisrandabschnitt (12r) aufweist, und das Luftführungselement (16) einen dem Basiselement (12) zugwandten Führungselementrandabschnitt (16r) aufweist, wobei der Basisrandabschnitt (12r) und der Führungsrandabschnitt (16r) derart ausgebildet sind, dass das Luftführungselement (16) mit dem Basiselement (12) lösbar verbindbar oder verbunden ist, insbesondere mittels einer formschlüssigen oder/und kraftschlüssigen Verbindung.

2. Luftansaugmodul (10) nach Anspruch 1, wobei das Luftführungselement (16) und das Basiselement (12) relativ zueinander und geführt zueinander beweglich, insbesondere translatorisch verschiebbar sind.

3. Kraftfahrzeug (200) mit verbrennungsmotorischem oder/und elektrischem Antrieb, wobei das Kraftfahrzeug (200) aufweist:
eine Karosserie mit einer einen Fahrzeuginnenraum (206) von einem Motorraum (208) trennenden Stirnwand (204), einem unterhalb einer Frontscheibe (202) angeordneten Frontscheiben-Querträger (214) und
wenigstens einem vor der Stirnwand (204) angeordneten Federbeindom (210);
ein Luftansaugmodul (10) mit einem Basiselement (12), das mit der Stirnwand (204) oder/und dem Frontscheiben-Querträger (214) verbunden ist, und mit einem eine Luftansaugöffnung (18) aufweisenden Luftführungselement (16), das an dem Basiselement (12) befestigbar oder befestigt ist,
wobei das Basiselement (12) einen dem Luftführungselement (16) zugewandten Basisrandabschnitt (12r) aufweist, und das Luftführungselement (16) einen dem Basiselement (12) zugwandten Führungselementrandabschnitt (16r) aufweist, wobei der Basisrandabschnitt (12r) und der Führungsrandabschnitt (16r) derart ausgebildet sind, dass das Luftführungselement (16) mit dem Basiselement (12) lösbar verbindbar oder verbunden ist, insbesondere mittels einer formschlüssigen oder/und kraftschlüssigen Verbindung.

4. Kraftfahrzeug (200) nach Anspruch 3, wobei das Basiselement (12) unterhalb des Frontscheiben-Querträgers (214) angeordnet und derart ausgebildet ist, dass das Luftführungselement (16) vor dem Frontscheiben-Querträger (214) angeordnet ist, insbesondere hinterschnittsfrei zu dem Frontscheiben-Querträger (214) an dem Basiselement (12) montierbar oder montiert ist.

5. Kraftfahrzeug (200) nach Anspruch 3 oder 4, wobei das Luftansaugmodul (10) bezogen auf eine Längsrichtung (X) des Kraftfahrzeugs (200) zwischen der Stirnwand (204) und dem Federbeindom (210) angeordnet ist.

6. Kraftfahrzeug (200) nach einem der Ansprüche 3 bis 5, wobei das Luftführungselement (16) relativ zu dem mit der Stirnwand (204) oder/und dem Frontscheiben-Querträger (214) verbundenen Basiselement (12) beweglich ist, insbesondere translatorisch entlang einer Höhenrichtung (Z, VR) verschiebbar ist.

7. Kraftfahrzeug (200) nach einem der Ansprüche 3 bis 6, wobei es einen Wasserkasten (30) aufweist mit einem Bodenelement (34) und mit einem Deckelelement (32), wobei das Luftansaugmodul (10), insbesondere das Luftführungselement (16) und dessen Luftansaugöffnung (18) unterhalb des Deckelelements (32) angeordnet sind.

8. Kraftfahrzeug (200) nach Anspruch 7, wobei ein in dem Bodenelement (34) des Wasserkastens (30) vorgesehenes Wassersammelbecken tiefer liegt als die Luftansaugöffnung (18) des Luftansaugmoduls (10).

9. Kraftfahrzeug (200) nach Anspruch 7 oder 8, wobei eine Außenseite des Luftansaugmoduls (10), insbesondere des Luftführungselements (16) dem Inneren des Wasserkastens (30) zugewandt ist.
